# EUROPEAN PATENT APPLICATION

(11) **EP 4 471 896 A1**
(43) Date of publication of application: **04.12.2024**
(21) Application number: 23743521.9
(22) Date of filing: 20.01.2023
(51) Int. Cl.: H01M 4/36, H01M 4/505, H01M 4/525, H01M 4/04, H01M 10/052, H01M 4/02

(54) **ONE-BODY PARTICLE AND ACTIVE MATERIAL FOR SECONDARY BATTERY INCLUDING THE SAME**

(30) Priority: 24.01.2022 KR 20220010150
(71) Applicant: L&F Co., Ltd., Daegu 42724 (KR)
(72) Inventor: CHANG, Gi Hwan, Daegu 42712 (KR); CHANG, Sung Kyun, Daegu 42712 (KR); SON, Hwa Young, Daegu 42712 (KR); HAN, Hyun Gyu, Daegu 42712 (KR); JO, Jae Joon, Daegu 42712 (KR); KIM, Han Ah, Daegu 42712 (KR); JEON, Seul Gi, Daegu 42712 (KR); LEE, Da Young, Daegu 42712 (KR)
(74) Representative: Frenkel, Matthias Alexander
(86) International application number: PCT/KR2023/000994
(87) International publication number: WO 2023/140677

(57) **Abstract**

Disclosed are a novel one-body particle for secondary battery active materials, including a core and a coating layer formed on at least a part of the core, wherein the coating layer comprises both Co and a structure-stabilizing element, the core is present as a non-aggregated primary particle, and the structure-stabilizing element has a bond dissociation energy (BDE) with oxygen (O) greater than a bond dissociation energy (BDE) of Co and oxygen (O), and a method of preparing a novel one-body powder containing the same.

## Description

### [Technical Field]

The present invention relates to a one-body particle and an active material for secondary batteries including the same, and more particularly to a one-body particle that contains a core present in the form of a non-aggregated primary particle, and Co and a structure-stabilizing element in a coating layer formed in at least a part of the core, and thus is capable of alleviating oxygen desorption, and improving resistance, capacity, efficiency, residual lithium, and lifespan characteristics while solving the problems of conventional secondary particle structures, and an active material for secondary batteries including the same.

### [Background Art]

Lithium secondary batteries are used in various fields from small devices such as drones and mobile devices to medium and large devices such as electric vehicles (EVs) and energy storage systems (ESSs) due to advantages including high operation voltage, energy density, long lifespan, and stability.

The active material particle used in a lithium secondary battery generally has a secondary particle structure having a size of several µm in which fine primary particles having a sub-micron size are aggregated. Such a secondary particle structure has a problem in that the secondary particle is broken as the aggregated primary particles are separated during repeated charging and discharging, causing deterioration in battery characteristics. Since this problem is due to the structural characteristics of the secondary particle, it is difficult to solve the problem without changing the structure thereof. Therefore, a one-body particle active material for secondary batteries having a novel structure has been developed.

This one-body active material has a "non-aggregated single particle (primary particle)" structure rather than a conventional "secondary particle structure including aggregated primary particles" and undergoes no particle separation during charging and discharging, and thus solves problems occurring in secondary particle active materials because there is almost no particle aggregation.

Here, the expression "there is almost no particle aggregation" means that a small amount of aggregate is inevitably present during the preparation of new one-body particles/powders. That is, it is impossible for all particles to be completely separated from one another due to technical limitations, so some aggregate may be unintentionally formed. The proportion of some aggregated particles may be within 30% of the total active material powder. Such some aggregated particles are not secondary particles.

In addition, the term "active material" encompasses both "particle" and "powder" including a plurality of particles. In the art, both particles and powders are commonly called "active materials". It is common to distinguish whether the term refers to particles or powder depending on the context in which it is used, but in the present invention, "particles" and "active material (powder)" are expressed separately to avoid confusion.

Unlike conventional secondary particles, the novel one-body particle has a size of several µm and does not have an aggregate structure, thus causing no particle separation during charging and discharging, and fundamentally solving problems occurring in secondary particle structures.

However, the secondary particle active material has been commercialized for a long time and has been applied to various industrial fields, but the one-body particle active material is used only for research purposes because it is very difficult to secure stability thereof. This is due to structural differences therebetween. As described above, the reason for this is that problems of the secondary particle active material that are difficult to solve can be easily avoided by the one-body particle, whereas problems that do not need to be considered in the secondary particle active material are critical in the one-body particle, and are very difficult to solve. The present applicant developed the present invention in view of the problems caused by such structural differences.

Oxygen desorption is a typical problem of one-body particles. The extent of oxygen desorption increases in proportion to the calcination temperature and the Ni content, and when the calcination temperature is low, the degree of oxygen desorption is very low, even when the Ni content is high.

In general, high-Ni (60 mol% or more of Ni) active materials in the form of secondary particles undergo very little oxygen desorption because the calcination temperature is as low as 700 to 800°C during production. In particular, as the Ni content increases, the calcination temperature is decreased to about 700°C and thus there is almost no oxygen desorption. For this reason, various studies are being conducted on secondary particle active materials to further improve capacity/output/efficiency, etc. rather than oxygen desorption.

Meanwhile, one-body particles have a high calcination temperature of about 850 to about 1,000°C, thus increasing oxygen desorption. It is impossible to produce a one-body particle structure at a low calcination temperature, so it is difficult to greatly lower the calcination temperature even when the Ni content is increased, and thus there is a problem in that it is difficult to reduce the oxygen desorption phenomenon. Oxygen desorption usually occurs on the surface of one-body particles.

As such, when the problem of oxygen desorption of one-body particles requiring a high calcination temperature is not solved, it becomes more difficult to produce a high-Ni active material for secondary batteries.

For example, when the Ni content of the one-body particles is less than 60%, the degree of oxygen desorption is not severe, but when the Ni content thereof is 60% or more, the degree of oxygen desorption increases, and particularly, when the Ni content thereof is 80% or more, it becomes very severe. It is impossible to solve this problem due to the high calcination temperature.

Oxygen desorption causes production, in an excessive amount, of NiO, which has a rock-salt structure, in the layered structure of the active material for secondary batteries, and increased Li byproducts. NiO gradually increases due to repeated charging and discharging, thus causing increased resistance and an increased amount of Li byproducts and thus various side reactions, which results in deterioration of battery performance such as capacity reduction. It is necessary to solve the problem of oxygen desorption in order to commercialize a one-body active material.

In addition to oxygen desorption, structural stability of one-body particles is an important factor determining lifespan. Mn, which functions to improve structural stability, is contained therein along with Ni. When the Ni content increases, the Mn content relatively decreases, thus causing problems of deteriorated structural stability and lifespan. That is, in order to produce high-Ni one-body particles having excellent properties, the two problems of oxygen desorption and lifespan reduction must be solved.

Specifically, Japanese Patent Laid-Open Publication No. 2003-068300, which pertains to a representative prior art related to one-body particles, discloses a one-body particle having an average particle diameter of 0.2 µm or more to 5 µm or less and a solution to the structural problems of secondary particle active materials as described above. Also, this patent discloses a lithium nickel-manganese composite oxide represented by LiNi_{0.5}Mn_{0.5}O₂ as an example of the one-body particle. However, the patent gives no consideration to the problem of oxygen desorption due to a high calcination temperature or to the problem of severe oxygen desorption due to high Ni content such as 60% or more.

In addition, Korean Patent No. 10-1971442, which pertains to a representative prior art related to a secondary particle active material, discloses secondary particles in which sub-micron-sized primary particles are aggregated, wherein the concentration of cobalt at the grain boundary between the primary particles is higher than the concentration of cobalt inside the primary particles. However, the patent also discloses a secondary particle structure and thus cannot solve the above-described structural problem and does not consider the problem of oxygen desorption occurring in one-body particles. In particular, the characteristic whereby a high concentration of cobalt is located at the grain boundary formed between the primary particles does not appear in structurally completely different one-body particles, and thus does not solve the problem resulting from the structural characteristics of the one-body particles described above.

As such, the inherent problems caused by the structural characteristics of one-body particles do not occur in the secondary particle structure, so an approach from a new perspective is needed to fundamentally solve the same.

### [Disclosure]

### [Technical Problem]

Therefore, the present invention has been made to solve the above and other technical problems that have yet to be solved.

Therefore, as a result of extensive research and various experiments, the present inventors solved problems such as increased resistance and decreased capacity due to NiO, which has a rock-salt structure and is stoichiometrically generated by oxygen desorption during the production of one-body particles and powders, and at the same time, solves the problem of deterioration in lifespan that occurs when the Mn content decreases due to the increase in the Ni content.

As described above, the secondary particle structure of conventional active materials for secondary batteries is in the form of densely aggregated primary particles, so there is an interface between closely adhered primary particles, whereas novel one-body particles for the active material for secondary batteries of the present invention are present as non-aggregated primary particles, and thus do not exhibit the above-mentioned structural characteristics and avoid the problem of separation between the aggregated primary particles.

In particular, as a result of extensive research to reduce oxygen desorption that occurs during calcination of novel one-body particles having a high Ni content and to mitigate the lifespan reduction, the present inventors found that, when a coating layer containing Co and the structure-stabilizing element is formed on the core, the oxygen desorption phenomenon was alleviated, thus leading to improved resistance/capacity/efficiency/residual lithium and lifespan characteristics. Based on this finding, the present invention was completed.

### [Technical Solution]

In accordance with an aspect of the present invention, provided is a novel one-body particle for secondary battery active materials, including:
a core and a coating layer formed on at least a part of the core,
wherein the coating layer contains both Co and a structure-stabilizing element,
the core is present as a non-aggregated primary particle, and
the structure-stabilizing element has a bond dissociation energy (BDE) with oxygen (O) greater than a bond dissociation energy (BDE) of Co and oxygen (O).

As defined above, the novel one-body particle according to the present invention includes a core present as a non-aggregated primary particle and a coating layer formed in at least a part of the core, wherein the coating layer contains Co and a structure-stabilizing element.

In a specific example, the core of the novel one-body particles of the present invention may be a lithium transition metal oxide containing Ni and the content of Ni may be 60 mol% or more, which may cause severe oxygen desorption during the calcination process, and in particular, preferably 80% or more, which may cause very severe oxygen desorption.

In general, Ni-based one-body particles that contain Ni as a main component among transition metals contain Mn to thereby improve lifespan characteristics. However, when the Ni content increases, the maximum possible content of Mn is relatively reduced, thus reducing structural stability and deteriorating lifespan.

According to the present invention, when Co is contained in the coating layer of the one-body particles, oxygen desorption is alleviated, and the capacity, efficiency or the like are improved by the action of Co. However, using only the coating layer containing Co, it is impossible to solve the problem of deterioration in lifespan due to a decrease in the Mn content. That is, Mn, which is homogeneously distributed in the entire volume of the novel one-body particle prepared through primary calcination, remarkably improves lifespan characteristics compared to Co in the coating layer formed through secondary calcination, so even if a coating layer containing Co is formed when the Mn content decreases, the lifespan characteristics are deteriorated.

In consideration thereof, the present inventors reviewed configurations of coating layer of further improving the lifespan despite the inclusion of Co in various technical aspects. Factors that decrease the lifespan of a secondary battery are combined factors rather than a specific single factor, and a representative factor is the deformation/collapse of the crystal structure due to charging and discharging. When the secondary battery is charged and discharged, the crystal structure contracts/expands, and the distance between the O (oxygen) layers that are separated from one another repeatedly increases and decreases. As this process is repeated, the crystal structure is deformed/collapsed, and the lifespan characteristics are deteriorated. This means that the deformation/collapse of the crystal structure can be suppressed if the distance between the O (oxygen) layers is maintained during charging and discharging. The present applicant predicted that the above-mentioned problems can be solved if these factors are improved.

In order to derive a method of suppressing the deformation/collapse of the crystal structure, it is necessary to first understand the difference between "bond dissociation energy (BDE)" and "bond energy". The term "bond dissociation energy (BDE)" is equal to the bond energy of a diatomic molecule and means the energy of a single chemical bond. In contrast, the term "bond energy" refers to the average of the "bond dissociation energy" of all bonds of a specific type in a molecule. The bond dissociation energy (BDE) with oxygen of each material is widely known in published literature such as Lange's Handbook of Chemistry, and thus a description thereof will be omitted herein.

Based thereon, the present inventors predicted that, if an element that can bind with strong energy ("structure-stabilizing element") to maintain the distance between O (oxygen) layers during charging and discharging is used in combination with Co, deformation/collapse of the crystal structure can be suppressed, and reviewed the criteria for selecting suitable elements therefor.

According to Lange's Handbook of Chemistry, the bond dissociation energy (BDE) of Co and O (oxygen) applied to the coating layer is 368 kJ/mol. It was found that merely applying Co to the coating layer was insufficient to prevent the distance between O (oxygen) layers from changing during charging and discharging. This finding led to the conclusion that, when a material (structure-stabilizing element) that can bond to O (oxygen) with a stronger force than Co is used in combination with Co, the oxygen desorption phenomenon can be alleviated, and at the same time, the collapse of the crystal structure can be further suppressed and the lifespan can be greatly improved.

As used herein, the term "structure-stabilizing element" means an element having a BDE greater than the bond dissociation energy (BDE) of Co and O, among elements that may constitute the active material for secondary batteries, the types of these elements and the bond dissociation energy thereof with O (oxygen) are as follows, and one element, or two or more elements and/or compounds, may be applied:
Zr (760 kJ/mol), Ti (662 kJ/mol), Al (512 kJ/mol), P (596.6 kJ/mol), Si (798 kJ/mol), B (806 kJ/mol), W (653 kJ/mol), Mg (394 kJ/mol), Sn (548 kJ/mol).

Accordingly, in one specific example, the structure-stabilizing element in the present invention may include one or more elements selected from the group consisting of Zr, Ti, Al, P, Si, B, W, Mg, and Sn. In the examples described below, preferred examples of the structure-stabilizing element include at least one of Ti, Al, and W.

Meanwhile, as can be seen from the experiments given later, the coating layer having Co and the structure-stabilizing element may preferably include both a coating layer extending outward from the surface of the core and a coating layer extending inward from the surface of the core.

For example, the former provides a structure in which the coating layer is formed in an outward direction from the surface of the core, whereas the latter provides a structure in which the coating layer is formed in an inward direction from the surface of the core. That is, elements may be combined from outside the core surface to form a coating layer having a composition different from that of the core, or elements diffuse inwards from the core surface to form a coating layer in which a part of the core surface has a composition different from that of the core.

Herein, the coating layer formed in the outer direction from the core surface may be classified as an "external coating layer" and the coating layer formed in the inner direction from the core surface may be classified as an "internal coating layer." depending on the location of the coating layer based on the core surface.

The coating layers may be formed differently depending on the calcination temperature under the constant Ni content conditions. In one specific example, when the Ni content is about 90% and calcination is performed at a lower temperature, the amount of Co penetrating the inside of the core decreases and a significant amount of Co reacts with Li on the surface to form a coating layer in the form of LCO (LiCoO₂). When Co forms a coating layer on the outside, the effect of suppressing oxygen desorption is relatively reduced, but the resistance reduction effect increases because residual Li is greatly reduced.

On the other hand, when calcination is performed at a high temperature under the constant Ni content conditions, a significant amount of Co diffuses from the core surface to the core inside to a predetermined depth, forming a coating layer with a predetermined thickness. Co is characterized by entering the core along with a large amount of oxygen (O). Thus, Co is supplied into the core along with oxygen (O). Specifically, as the Ni content increases, oxygen desorption at the surface also rapidly increases. When Co diffuses into the core, it draws external oxygen into the core and induces recombination of Li and oxygen, thus reducing oxygen desorption at the surface. In other words, the crystal structure, which has become unstable due to oxygen desorption, is restored to a uniform layered structure due to recombination with the oxygen introduced inside the core, thus improving lifespan characteristics.

However, although an internal coating layer with an appropriate thickness is present as described above, unless the external coating layer is present, the surface ionic conductivity is not improved. Therefore, in terms of resistance, more preferably, the external coating layer and the internal coating layer coexist. In addition, unless the external coating layer is present, gas may be generated during long-term charging and discharging due to a side reaction with the electrolyte, which may cause a defect in the stability of the battery.

As a result, as can be seen from the experimental results in Table 1 described later, the coexistence of the internal coating layer and the external coating layer significantly contributes to improving the lifespan and resistance increase rate.

Specifically, when a large amount of heat is applied such that Co or the like diffuses, rather than forming a coating layer with a certain thickness on the inside (surface layer) of the one-body particle due to an excessively high secondary calcination temperature (e.g., 800°C in Comparative Examples described below), rock salt-structured NiO forms in the surface layer due to oxygen (O) desorbed from the inside of the one-body particle and rather the partial mutual substitution of lithium sites and transition metal sites is accelerated, leading to a decrease in lifespan and an increase in resistance increase rate.

On the other hand, when the coating layer containing Co or the like does not penetrate into the interior of the one-body particle at all and is formed as a lithium compound only on the outside of the core surface due to an excessively low secondary calcination temperature (for example, 500°C in Comparative examples described below), the bonding force between the coating layer and the core is weak, thus causing electrochemical detachment of the transition metal during charge-discharge cycling. Since the deformed structure caused by oxygen desorption inside the particle cannot be improved at all, the lifespan improvement effect may be relatively reduced compared to the case where a coating layer with a certain thickness is formed inside the particle.

Therefore, it is more preferable in terms of electrochemical performance and stability that the particle be designed such that an internal coating layer with an appropriate thickness to improve lifespan by controlling the deformed structure inside the one-body particle and an external coating layer to prevent side reactions with the electrolyte and decrease initial resistance with high ionic conductivity exist at the same time.

In addition, oxygen desorption occurs mainly in the surface area corresponding to about 10% of the length from the center of the core to the surface thereof. Therefore, the thickness of the coating layer is preferably within 20%, more preferably 15% of the average particle diameter of the core so that the coating layer includes the area where oxygen desorption mainly occurs. The thickness of the coating layer refers to a total thickness of the internal coating layer and the external coating layer. In one specific example, the ratio between the thickness of the internal coating layer and the thickness of the external coating layer may range from 0.2:0.8 to 0.8:0.2.

As defined above, in the novel one-body particle of the present invention, the core is present as a non-aggregated primary particle.

In one specific example, the non-aggregated primary particle may have an average particle diameter (D50) of 1 µm to 10 µm so as to exhibit appropriate properties for a cathode active material. The cathode active material is present as non-aggregated primary particles having the particle size as described above, thus solving the problems of the conventional secondary particle structure in which the secondary particles are broken and cleaved into primary particles during repeated charging and discharging, thus causing deteriorated battery characteristics.

The coating layer may include a plurality of layers including an external coating layer that contains at least one of Co, Zr, Ti, Al, P, Si, B, W, Mg, and Sn, and is formed outward from the core surface, and an internal coating layer that contains at least one of Ni, Co, and Mn, and at least one of Zr, Ti, Al, P, Si, B, W, Mg, and Sn, and is formed inward from the core surface. However, as described above, some layers may not contain some or all of the elements, but the coating layer at least satisfies the requirement of containing Co and the structure-stabilizing element from the overall viewpoint of the coating layer.

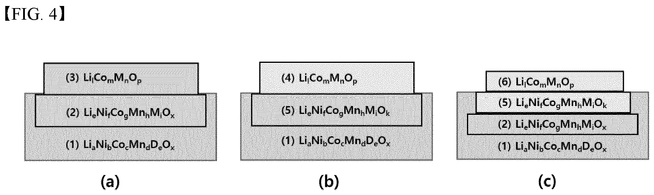

In one specific example, in the present invention, the core, which is a lithium transition metal oxide containing Ni, may have the following Formula 1, the coating layer may include at least two of the following Formulas 2 to 6, and examples of coating layers formed based thereon are shown in FIG. 4. The coating layer may be formed as a variety of configurations, depending on the Ni content, calcination temperature, calcination method, or the like.
[Formula 1] - Core

   LiₐNi_{b}Co_{c}Mn_{d}DₑOₓ (1)

   wherein a, b, c, d, e and x satisfy 0.95<a<1.1, 0<b≤1, 0≤c<1, 0≤d<1, 0≤e≤0.05, and 0<x≤4, respectively, and
   D includes at least one of Ti, Zr, Al, P, Si, B, W, Mg, and Sn.
[Formula 2] - Internal coating layer

   LiₑNi_{f}Co_{g}MnₕMᵢOₖ (2)

   wherein e, f, g, h, i, and k satisfy 0.95≤e≤1.1, 0≤f<1, 0<g<1, 0≤h<1, 0≤i<1, and 0<k≤4, respectively, with the proviso that g>i, and
   M includes at least one of Ti, Zr, Al, P, Si, B, W, Mg, and Sn.
[Formula 3] - External coating layer

   LiₗCoₘMₙOₚ (3)

   wherein l, m, n, and p satisfy 0≤l≤1.1, 0<m<1, 0≤n<1, and 0<p≤4, respectively, with the proviso that m>n, and
   M includes at least one of Ti, Zr, Al, P, Si, B, W, Mg, and Sn.
[Formula 4] - External coating layer

   LiₗCoₘMₙOₚ (4)

   wherein l, m, n and p satisfy 0≤l≤1.1, 0≤m<1, 0<n<1, and 0<p≤4, respectively, with the proviso that m<n, and
   M includes at least one of Ti, Zr, Al, P, Si, B, W, Mg, and Sn.
[Formula 5] - Internal coating layer

   LiₑNi_{f}Co_{g}MnₕMᵢOₖ (5)

   wherein e, f, g, h, i, and k satisfy 0.95≤e≤1.1, 0≤f<1, 0<g<1, 0≤h<1, 0<i<1, and 0<k≤4, respectively, with the proviso that g≤i, and
   M includes at least one of Ti, Zr, Al, P, Si, B, W, Mg, and Sn.
[Formula 6] - External coating layer

   LiₗCoₘMₙOₚ (6)

   wherein l, m, n and p satisfy 0≤l≤1.1, 0<m<1, 0<n<1, and 0<p≤4, respectively,
   M includes at least one of Ti, Zr, Al, P, Si, B, W, Mg, and Sn.

In the formulas above, the material for the coating layer mainly formed inside the core may have the composition of Formula 2 or 5, and the material for the coating layer mainly formed outside the core may have the composition of Formula 3, 4 or 6. For reference, M in the internal coating layers of Formulas 2 and 5 may be partially derived from the core, may be partially derived from the raw materials for producing the coating layer, or may be partially derived from the core while being partially derived from the raw materials for producing the coating layer.

As shown in FIG. 4, the combination including both the internal coating layer and the external coating layer may be varied.

A first example is a combination of an internal coating layer containing the composition of Formula 2 and an external coating layer containing the composition of Formula 3.

A second example is a combination of an internal coating layer containing the composition of Formula 5 and an external coating layer containing the composition of Formula 4.

A third example is a combination of an internal coating layer including a first coating layer containing the composition of Formula 2 and a second coating layer including the composition of Formula 5, and an external coating layer containing the composition of Formula 6.

As can be seen from the above formulas, there may be cases in which the same element as the structure-stabilizing element among the element(s) constituting the core is contained. In this case, at least one of Co and the structure-stabilizing element may have a higher content in the coating layer than in the core, and preferably, both Co and the structure-stabilizing element may have a higher content in the coating layer than in the core.

In terms of more effectively alleviating oxygen desorption and improving lifespan characteristics, it may be more preferable that the content of at least one of Co and the structure-stabilizing element in the coating layer is at least 10% higher than the content (mol%) of the same element in the core.

In one specific example, powders containing the one-body particles may be produced by a method including the following steps:
(a) mixing a transition metal precursor containing Ni with a Li raw material to prepare a first mixture;
(b) primary calcination of calcining the first mixture to produce a primary calcination product; and
(c) forming a coating layer containing Co and a structure-stabilizing element in at least a part of the primary calcination product.

The structure-stabilizing element has a greater bond-dissociation energy (BDE) with oxygen (O) than the bond-dissociation energy between Co and oxygen (O).

As described above, the one-body particle is not one unit of particle, but a plurality of one-body particles. Therefore, the preparation method used herein is defined as a method of preparing a one-body powder containing a plurality of one-body particles.

In the preparation step (a), the "transition metal precursor containing Ni" includes both a precursor containing Ni and a precursor containing Ni and one or more transition metals other than Ni, and the precursor containing Ni, and Ni and one or more transition metals other than Ni may be prepared, for example, by coprecipitation. "Li raw material" is a material containing lithium, for example, Li₂CO₃, LiOH, or the like.

In some cases, doping raw materials may be further mixed with the first mixture in the preparation step (a).

The primary calcination (b) is a step of calcining the prepared first mixture to produce a primary calcination product. Generally, the calcination temperature varies depending on the particle shape (one-body structure/secondary particle structure) and Ni content. In the examples described later, the primary calcination was performed at 890 to 930°C, but the range may be selected from 700 to 1,000°C. If necessary, the calcination may be performed in several divided temperature sections within the corresponding temperature range. The primary calcination product that has undergone the primary calcination at high temperature is in an oxide state. When the primary calcination product is mixed with a doping raw material in the preparation step (a), a doped secondary battery active material oxide powder (primary calcination product) is prepared.

The coating layer forming step (c) of forming a coating layer containing Co and a structure-stabilizing element in at least a part of the primary calcination product may be performed by spraying or solution reaction as well as heat-treatment after mixing depending on the type of the desired coating layer and is not limited to the method used herein. In order to implement the "internal coating layer" and "external coating layer" used herein, for example, a predetermined amount of Co is incorporated into the single particle through heat treatment to form an "internal coating layer", a predetermined amount of Co is applied evenly on the surface using a spraying method or a solution reaction, and an "external coating layer" is formed through heat treatment at a relatively low temperature. However, the method for implementing the design of the coating layer is of course not limited to the method specified herein as long as the roles of the "internal coating layer" and "external coating layer" used herein are implemented.

The heat treatment used in the present invention may be performed at a temperature range lower than the temperature of the primary calcination, and in the examples described later, secondary calcination is performed at 500 to 600°C to prepare an active material for secondary batteries including both an internal coating layer and an external coating layer.

The Co raw material is a material containing Co. For example, the Co raw material may be selected from hydroxides such as Co(OH)₂ and Co(OH)₃, oxides, and various salts such as CoSO₄, and the term "structure-stabilizing element raw material" is a material containing a structure-stabilizing element, for example, an oxide, any of various salts, and hydroxides of structure-stabilizing element such as H₃BO₃, B₂O₃, ZrO₂, TiO₂, Al₂O₃, or (NH₄)₃PO₄, but is not limited thereto.

The present invention also provides an active material for secondary batteries including the novel one-body particle. The configuration and production method of the active material for secondary batteries are known in the art, and thus a detailed description thereof will be omitted herein.

### [Effects of the Invention]

As described above, the one-body particle according to the present invention has effects of solving the problem of the conventional secondary particle structure in the active material for secondary batteries having a high Ni content, alleviating oxygen desorption that occurs during calcination of the one-body particle, and greatly improving resistance/capacity/efficiency/residual lithium/lifespan characteristics.

### [Description of the Drawings]

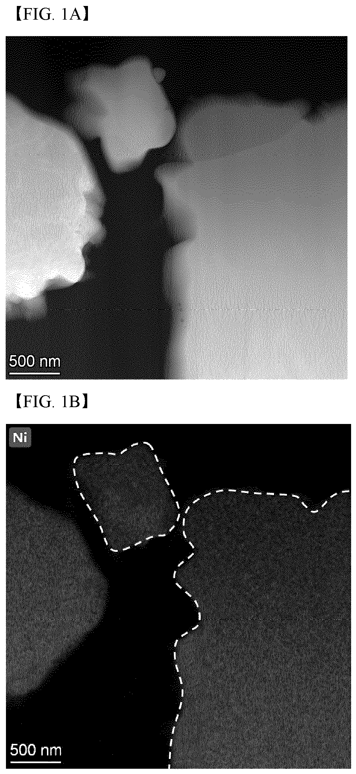

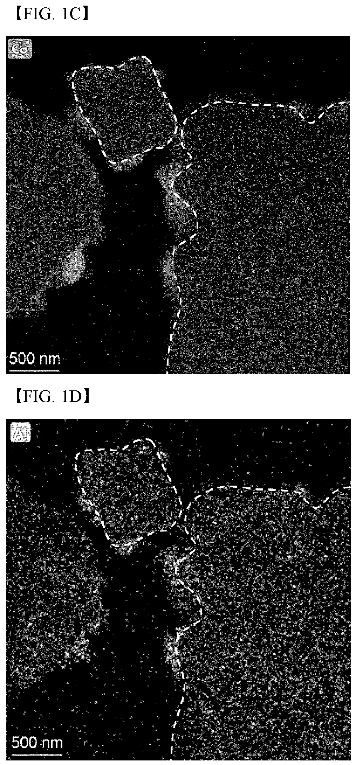

FIGS. 1A to 1D are EDS images of the FE-TEM cross-section of the cathode active material particles of Comparative Example 6 performed in Experiment Example 4, wherein (a) is a cross-sectional FE-TEM image, (b) is an EDS mapping image of Ni element wherein a core boundary is marked, (c) is an EDS mapping image of Co element, and (d) is an EDS mapping image of Al element;

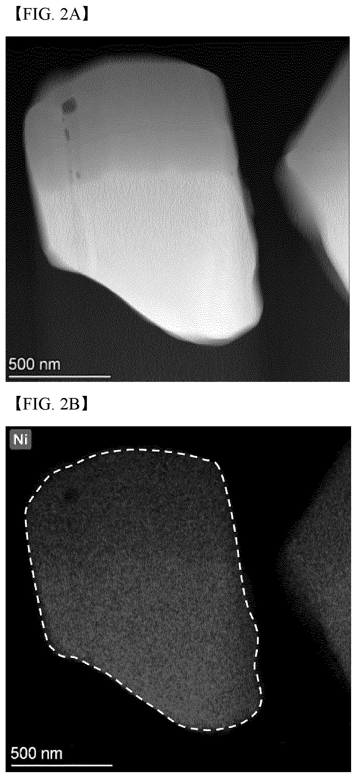

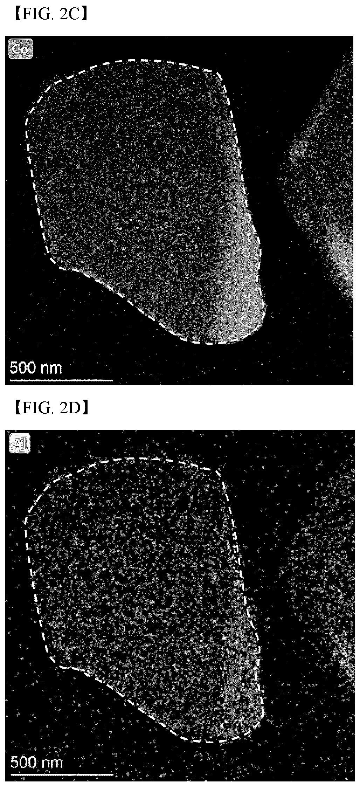

FIGS. 2A to 2D are EDS images of the FE-TEM cross-section of the cathode active material particles of Comparative Example 11 performed in Experiment Example 4, wherein (a) is a cross-sectional FE-TEM image, (b) is an EDS mapping image of Ni element wherein a core boundary is marked, (c) is an EDS mapping image of Co element, and (d) is an EDS mapping image of Al element;

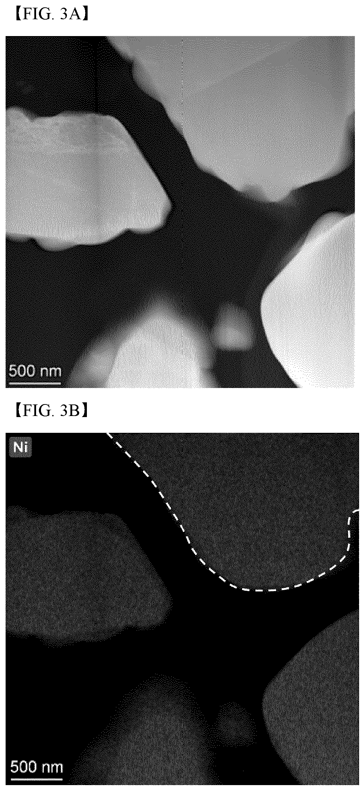

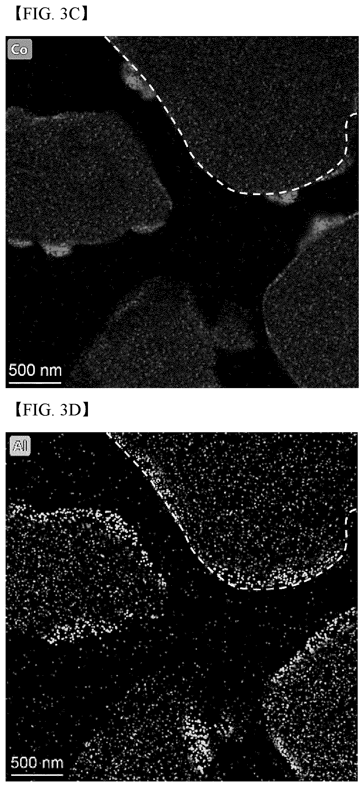

FIGS. 3A to 3D are EDS images of the FE-TEM cross-section of the cathode active material particles of Example 3 performed in Experiment Example 4, wherein (a) is a cross-sectional FE-TEM image, (b) is an EDS mapping image of Ni element wherein a core boundary is marked, (c) is an EDS mapping image of Co element, and (d) is an EDS mapping image of Al element; and
FIG. 4 is a schematic diagram illustrating the configuration of coating layers including an internal coating layer and an external coating layer according to an embodiment of the present invention.

### [Best mode]

Now, the present invention will be described in more detail with reference to the following examples. These examples should not be construed as limiting the scope of the present invention.

### [Comparative Example 1]

NiSO₄ as a nickel raw material, CoSO₄ as a cobalt raw material, and MnSO₄ as a manganese raw material were added at a molar ratio of 0.75:0.1:0.15 to distilled water in a 500L cylindrical reactor to prepare an aqueous solution of a nickel-cobalt-manganese hydroxide precursor. An aqueous sodium hydroxide solution and an aqueous ammonia solution (chelating agent) were added to the aqueous solution while stirring to adjust the pH in the reactor to 10.2 to 12.5 and the ammonia concentration in the reactor to 4,000 to 5,500 ppm.

The precursor was slowly added dropwise and the reaction mixture was stirred for 24 hours while maintaining the temperature of the reactor at 60°C, to neutralize the aqueous precursor solution and precipitate Ni_{0.75}Co_{0.1}Mn_{0.15}(OH)₂, which is nickel-cobalt-manganese hydroxide.

After the coprecipitation reaction, the synthesized precipitate was filtered and dried at 120°C for 24 hours to prepare a cathode active material precursor with a BET of 10 to 13 m²/g and a TD of 1 to 2.5 g/cm³.

The precursor (nickel-cobalt-manganese hydroxide) thus obtained was mixed with LiOH at a ratio of Li/Metal = 1.05 using a 50L powder mixer (HDSM-I-50, HANtech), followed by primary calcination at 930°C for 6 hours to prepare LiNi_{0.75}Co_{0.1}Mn_{0.15}O₂.

### [Comparative Example 2]

An aqueous nickel-cobalt-manganese hydroxide precursor solution was prepared in substantially the same manner as the preparation of the cathode active material in Comparative Example 1, except that NiSO₄ as a nickel raw material, CoSO₄ as a cobalt raw material, and MnSO₄ as a manganese raw material were added to distilled water at a molar ratio of 0.85:0.1:0.05.

In addition, the precursor (nickel-cobalt-manganese hydroxide) was mixed with LiOH at a ratio of Li/Metal = 1.05 using a 50L powder mixer, followed by primary calcination at 910°C for 6 hours to prepare LiNi_{0.85}Co_{0.1}Mn_{0.05}O₂.

### [Comparative Example 3]

An aqueous nickel-cobalt-manganese hydroxide precursor solution was prepared in substantially the same manner as the preparation of the cathode active material in Comparative Example 1, except that NiSO₄ as a nickel raw material, CoSO₄ as a cobalt raw material, and MnSO₄ as a manganese raw material were added to water at a molar ratio of 0.95:0.025:0.025.

In addition, the precursor (nickel-cobalt-manganese hydroxide) was mixed with LiOH at a ratio of Li/Metal = 1.05 using a 50L powder mixer, followed by primary calcination at 890°C for 6 hours to prepare LiNi_{0.95}Co_{0.025}Mn_{0.025}O₂.

### [Comparative Example 4]

NiSO₄ as a nickel raw material and CoSO₄ as a cobalt raw material were added at a molar ratio of 0.95:0.05 to water to prepare an aqueous solution of a nickel-cobalt hydroxide precursor. An aqueous sodium hydroxide solution was slowly added dropwise while stirring the aqueous solution, and the reaction mixture was stirred for 5 hours to neutralize the aqueous precursor solution and precipitate Ni_{0.88}Co_{0.12}(OH)₂, a nickel-cobalt hydroxide.

The precursor (nickel-cobalt hydroxide) thus obtained was mixed with LiOH at a ratio of Li/Metal = 1.05 using a 50L powder mixer, followed by primary calcination at 910°C for 6 hours to prepare LiNi_{0.95}Co_{0.05}.

### [Comparative Example 5]

The cathode active material subjected to primary calcination in Comparative Example 3 was mixed with Co(OH)₂ corresponding to 1.5 mol of Co using a 30L powder mixer (HDSM-I-20, HANtech), followed by secondary calcination at 800°C for 7 hours to form a coating layer containing Co on the surface of the cathode active material.

### [Comparative Example 6]

The cathode active material subjected to primary calcination in Comparative Example 3 was mixed with Co(OH)₂ and Al₂O₃ corresponding to 1.5 mol of Co and 0.05 mol of Al, using a 30L powder mixer (HDSM-I-20, HANtech), followed by secondary calcination at 500°C for 7 hours to form a coating layer containing cobalt (Co) and aluminum (Al) on the surface of the cathode active material.

### [Comparative Example 7]

The cathode active material subjected to primary calcination in Comparative Example 3 was mixed with Co(OH)₂ and WO₃ corresponding to 1.5 mol of Co and 0.3 mol of W, using a 30L powder mixer (HDSM-I-20, HANtech), followed by secondary calcination at 400°C for 7 hours to form a coating layer containing cobalt (Co) and tungsten (W) on the surface of the cathode active material.

### [Comparative Example 8]

The cathode active material subjected to primary calcination in Comparative Example 3 was mixed with Co(OH)₂ and TiO₂ corresponding to 1.5 mol of Co and 0.1 mol of Ti using a 30L powder mixer (HDSM-I-20, HANtech), followed by secondary calcination at 500°C for 7 hours to form a coating layer containing cobalt (Co) and titanium (Ti) on the surface of the cathode active material.

### [Comparative Example 9]

The cathode active material subjected to primary calcination in Comparative Example 1 was mixed with Co(OH)₂ and Al₂O₃ corresponding to 1.5 mol of Co and 0.05 mol of Al using a 30L powder mixer, followed by secondary calcination at 800°C for 7 hours to form a coating layer containing cobalt (Co) and aluminum (Al) on the surface of the cathode active material.

### [Comparative Example 10]

The cathode active material subjected to primary calcination in Comparative Example 2 was mixed with Co(OH)₂ and Al₂O₃ corresponding to 1.5 mol of Co and 0.05 mol of Al using a 30L powder mixer, followed by secondary calcination at 800°C for 7 hours to form a coating layer containing cobalt (Co) and aluminum (Al) on the surface of the cathode active material.

### [Comparative Example 11]

The cathode active material subjected to primary calcination in Comparative Example 3 was mixed with Co(OH)₂ and Al₂O₃ corresponding to 1.5 mol of Co and 0.05 mol of Al using a 30L powder mixer, followed by secondary calcination at 800°C for 7 hours to form a coating layer containing cobalt (Co) and aluminum (Al) on the surface of the cathode active material.

### [Comparative Example 12]

The cathode active material subjected to primary calcination in Comparative Example 3 was mixed with Co(OH)₂ and WO₃ corresponding to 1.5 mol of Co and 0.3 mol of W using a 30L powder mixer (HDSM-I-20, HANtech), followed by secondary calcination at 800°C for 7 hours to form a coating layer containing cobalt (Co) and tungsten (W) on the surface of the cathode active material.

### [Comparative Example 13]

The cathode active material subjected to primary calcination in Comparative Example 3 was mixed with Co(OH)₂ and TiO₂ corresponding to 1.5 mol of Co and 0.1 mol of Ti using a 30L powder mixer (HDSM-I-20, HANtech), followed by secondary calcination at 800°C for 7 hours to form a coating layer containing cobalt (Co) and titanium (Ti) on the surface of the cathode active material.

### [Example 1]

The cathode active material subjected to primary calcination in Comparative Example 1 was mixed with Co(OH)₂ and Al₂O₃ corresponding to 1.5 mol of Co and 0.05 mol of Al using a 30L powder mixer, followed by secondary calcination at 600°C for 7 hours to form a coating layer containing cobalt (Co) and aluminum (Al) on the surface of the cathode active material.

### [Example 2]

The cathode active material subjected to primary calcination in Comparative Example 2 was mixed with Co(OH)₂ and Al₂O₃ corresponding to 1.5 mol of Co and 0.05 mol of Al using a 30L powder mixer, followed by secondary calcination at 600°C for 7 hours to form a coating layer containing cobalt (Co) and aluminum (Al) on the surface of the cathode active material.

### [Example 3]

The cathode active material subjected to primary calcination in Comparative Example 3 was mixed with Co(OH)₂ and Al₂O₃ corresponding to 1.5 mol of Co and 0.05 mol of Al using a 30L powder mixer, followed by secondary calcination at 600°C for 7 hours to form a coating layer containing cobalt (Co) and aluminum (Al) on the surface of the cathode active material.

### [Example 4]

The cathode active material subjected to primary calcination in Comparative Example 1 was mixed with Co(OH)₂ and WO₃ corresponding to 1.5 mol of Co and 0.3 mol of W using a 30L powder mixer (HDSM-I-20, HANtech), followed by secondary calcination at 500°C for 7 hours to form a coating layer containing cobalt (Co) and tungsten (W) on the surface of the cathode active material.

### [Example 5]

The cathode active material subjected to primary calcination in Comparative Example 2 was mixed with Co(OH)₂ and WO₃ corresponding to 1.5 mol of Co and 0.3 mol of W using a 30L powder mixer (HDSM-I-20, HANtech), followed by secondary calcination at 500°C for 7 hours to form a coating layer containing cobalt (Co) and tungsten (W) on the surface of the cathode active material.

### [Example 6]

The cathode active material subjected to primary calcination in Comparative Example 3 was mixed with Co(OH)₂ and WO₃ corresponding to 1.5 mol of Co and 0.3 mol of W using a 30L powder mixer (HDSM-I-20, HANtech), followed by secondary calcination at 500°C for 7 hours to form a coating layer containing cobalt (Co) and tungsten (W) on the surface of the cathode active material.

### [Example 7]

The cathode active material subjected to primary calcination in Comparative Example 1 was mixed with Co(OH)₂ and TiO₂ corresponding to 1.5 mol of Co and 0.1 mol of Ti using a 30L powder mixer (HDSM-I-20, HANtech), followed by secondary calcination at 600°C for 7 hours to form a coating layer containing cobalt (Co) and titanium (Ti) on the surface of the cathode active material.

### [Example 8]

The cathode active material subjected to primary calcination in Comparative Example 2 was mixed with Co(OH)₂ and TiO₂ corresponding to 1.5 mol of Co and 0.1 mol of Ti using a 30L powder mixer (HDSM-I-20, HANtech), followed by secondary calcination at 600°C for 7 hours to form a coating layer containing cobalt (Co) and titanium (Ti) on the surface of the cathode active material.

### [Example 9]

The cathode active material subjected to primary calcination in Comparative Example 3 was mixed with Co(OH)₂ and TiO₂ corresponding to 1.5 mol of Co and 0.1 mol of Ti using a 30L powder mixer (HDSM-I-20, HANtech), followed by secondary calcination at 600°C for 7 hours to form a coating layer containing cobalt (Co) and titanium (Ti) on the surface of the cathode active material.

### [Experimental Example 1] - Measurement of resistance

The cation active material synthesized in each of Comparative Examples 1 to 13, and Examples 1 to 9, Super-P as a conductive material, and PVdF as a binder were mixed at a weight ratio of 96:2:2 in the presence of N-methylpyrrolidone as a solvent to prepare a cathode active material slurry. The cathode active material slurry was applied onto an aluminum current collector, dried at 120°C, and then rolled to produce a cathode.

A porous polyethylene film as a separator was interposed between the cathode produced as described above and a Li metal anode to produce an electrode assembly, the electrode assembly was placed in a battery case, and an electrolyte was injected into the battery case to produce a lithium secondary battery. The electrolyte used herein was prepared by dissolving 1.0M lithium hexafluorophosphate (LiPF₆) in an organic solvent consisting of ethylene carbonate/dimethyl carbonate (mixed at a volume ratio of EC/DMC = 1/1).

Each of the lithium secondary batteries thus produced was subjected to charge (at 0.1C, 4.25V) and discharge (at 0.1C, 2.5V). The applied current was divided by a voltage change for 0 to 65 seconds from the start of the discharge to calculate a resistance (V/I=R). The results are shown in Table 1 below.

### [Experimental Example 2] - Measurement of residual lithium

Residual lithium was measured under the following conditions in the cathode active materials prepared in Comparative Examples 1 to 13 and Examples 1 to 9, and the results are shown in Table 1 below.
① Sample pretreatment
   - 5±0.01 g of sample and 100 g of distilled water were added to a conical beaker containing a magnetic bar, followed by stirring for 5 minutes.
   - The stirred sample was naturally filtered through filter paper.
   - The filtrate was titrated in a beaker.
② Test method
   - A titrator was filled with a titrant (0.1N HCl), and then bubbles were removed from the cylinder.
   - Titrant: 0.1N HCl
   - Titrant aliquot method: DET
   - Condition for automatic completion of titration: pH 2.5
   - Calculation: FP(1) = 4.5, EP(1)
   - Titration rate: Greatest.

### [Experimental Example 3] - Measurement of lifespan and resistance increment

As can be seen from Experimental Example 1, a lithium secondary battery was prepared based on each of the cathode active materials prepared in Comparative Examples 1 to 13 and Examples 1 to 9 and was subjected to CC/CV charge (at 0.5C and 4.25V) and CC discharge (at 1.0C and 2.5V) 50 times at 45°C, and the lifespan and resistance increment thereof were measured. The results are shown in Table 1 below.

**[Table 1]**

| Item | Characteristics | | | | | | |
|---|---|---|---|---|---|---|---|
| | Resistance (Ohm) | Charge Capacity (mAh/g) | Discharge capacity (mAh/g) | Efficiency (%) | Residual lithium (%) | Lifespan (%) | Resistance increment (%) |
| Comparative Example 1 | 19.4 | 212.1 | 184.9 | 87.2 | 0.208 | 92.6 | 89.9 |
| Comparative Example 2 | 21.0 | 227.5 | 202.0 | 88.8 | 0.601 | 91.7 | 96.9 |
| Comparative Example 3 | 31.8 | 241.5 | 207.0 | 85.7 | 0.703 | 89.8 | 101.6 |
| Comparative Example 4 | 28.5 | 243.1 | 209.4 | 86.1 | 0.785 | 90.1 | 84.2 |
| Comparative Example 5 | 21.8 | 243.8 | 212.9 | 87.3 | 0.322 | 91.3 | 52.8 |
| Comparative Example 6 | 18.5 | 242.9 | 210.6 | 86.7 | 0.258 | 90.4 | 73.2 |
| Comparative Example 7 | 15.3 | 247.0 | 219.5 | 88.9 | 0.288 | 91.5 | 80.3 |
| Comparative Example 8 | 18.1 | 242.1 | 213.8 | 88.3 | 0.234 | 93.0 | 52.1 |
| Comparative Example 9 | 17.1 | 208.4 | 182.3 | 87.5 | 0.175 | 93.9 | 74.8 |
| Comparative Example 10 | 18.2 | 229.2 | 206.3 | 90.0 | 0.255 | 92.6 | 68.2 |
| Comparative Example 11 | 23.6 | 243.6 | 213.4 | 87.6 | 0.251 | 92.7 | 47.4 |
| Comparative Example 12 | 18.4 | 244.1 | 216.0 | 88.5 | 0.246 | 93.1 | 50.3 |
| Comparative Example 13 | 22.0 | 238.9 | 209.1 | 87.5 | 0.208 | 94.2 | 35.0 |

In Table 1, Comparative Examples 1 to 4 correspond to one-body particles having no coating layer, Comparative Example 1 corresponds to Ni70-based NCM, Comparative Example 2 corresponds to Ni80-based NC, Comparative Example 3 corresponds to Ni90-based NCM, and Comparative Example 4 corresponds to Ni90-based NC. Comparative Example 5 corresponds to a one-body particle coated with only Co (cobalt) particles without a structure-stabilizing element.

Comparative Example 6 corresponds to a Ni90-based one-body particle in which Co and a structure-stabilizing element (Al) were used to design a high proportion of an external coating layer. Compared to Example 3 and Comparative Example 11, in Table 1 above, Comparative Example 6 exhibits an initial resistance alleviation effect due to the high ionic conductivity of the coating layer, but exhibits less lifespan and more resistance increase rate because structural stabilization in which the coating element penetrates into one-body particles and restores the damaged structure caused by oxygen desorption is insufficient.

Comparative Example 7 relates to Ni90-based one-body particles with a high proportion of an external coating layer formed using Co and a different type of structure-stabilizing element (W) from Comparative Example 6, and Comparative Example 8 relates to Ni90-based one-body particles with a high proportion of an external coating layer formed using Co and a different type of structure-stabilizing element (Ti) from Comparative Example 6. As shown in Comparative Example 6, in Table 1, Comparative Example 7 has inferior lifespan and resistance increase rate to Comparative Example 12 and Example 6, and Comparative Example 8 has inferior lifespan and resistance increase rate to Comparative Example 13 and Example 9.

Comparative Examples 9 to 11, respectively, relate to Ni70-based one-body particles, Ni80-based one-body particles, and Ni90-based one-body particles with a high proportion of an internal coating layer formed using Co and a structure-stabilizing element (Al). When comparing Comparative Example 11 corresponding to the Ni90-based one-body particles in Table 1 with Comparative Example 3, the one-body particle of Comparative Example 11 exhibits an improvement in lifespan by controlling the internally deformed structure, but much higher initial resistance than that of Comparative Example 6 and Example 3 due to the absence of the external coating layer.

Comparative Example 12 relates to Ni90-based one-body particles with a high proportion of an external coating layer formed using Co and a different type of structure-stabilizing element (W) from Comparative Example 11, and Comparative Example 13 relates to Ni90-based one-body particles with a high proportion of an external coating layer formed using Co and a different type of structure-stabilizing element (Ti) from Comparative Example 11. As shown in Comparative Example 11, in Table 1, Comparative Example 12 has inferior lifespan and resistance increase rate to Comparative Example 7 and Example 6, and Comparative Example 13 has inferior lifespan and resistance increase rate to Comparative Example 8 and Example 9.

Meanwhile, Examples 1 to 3, respectively, relate to Ni70-based one-body particles, Ni80-based one-body particles, and Ni90-based one-body particles with an appropriate proportion of an external coating layer and an internal coating layer formed using Co and a structure-stabilizing element (Al). When the coating layer is formed in this way, both the effect of improving initial resistance and the effect of improving lifespan and resistance increase rate can be obtained.

In addition, Examples 4 to 6, respectively, relate to Ni70-based one-body particles, Ni80-based one-body particles, and Ni90-based one-body particles with an appropriate proportion of an external coating layer and an internal coating layer formed using Co and a structure-stabilizing element (W). Examples 7 to 9, respectively, relate to Ni70-based one-body particles, Ni80-based one-body particles, and Ni90-based one-body particles with an appropriate proportion of an external coating layer and an internal coating layer formed using Co and a structure-stabilizing element (Ti). As can be seen from Examples 1 to 3, both the effect of improving initial resistance and the effect of improving lifespan and resistance increase rate can be obtained, regardless of the type of structure-stabilizing element.

Therefore, it can be seen that the same improvement effect appears in the wide Ni composition range corresponding to Examples 1 to 3, and that the same improvement effect appears even when other structure-stabilizing elements corresponding to Examples 4 to 6 and Examples 7 to 9 are used. This may mean that the same improvement effect as in the above example will appear even if Ni-rich one-body particles with different Ni compositions, which may cause oxygen desorption, and other structure-stabilizing elements are used. In other words, when one-body particles are coated with Co and a structure-stabilizing element, the role of each coating layer is different depending on whether or not it is formed on the inside or outside of the core regardless of the Ni composition and type of structure-stabilizing element, and the cathode active material having both the internal and external coating layers exhibits superior electrochemical performance and stability, including initial resistance, capacity, lifespan, and resistance increase rate.

### [Experimental Example 4] - FE-SEM, FE-TEM EDS mapping analysis

For FE-SEM analysis of the cathode active materials prepared in Comparative Example 6, Comparative Example 11, and Example 3, specimens were produced in a metal mold using carbon tape, pretreated using vacuum sputtering and measured under the following analysis conditions. Separately, the cathode active materials prepared in Comparative Example 6, Comparative Example 11, and Example 3 were faced using a focused ion beam (FIB), FE-TEM was performed under the following analysis conditions, and EDS mapping was performed. The results are shown in FIGS. 1A to 1D, 2A to 2D, and 3A to 3D.

### [FE-SEM measurement conditions]

Model: HITACHI (S-4800)
Resolution: 1.0 nm 15kV, 1.5 nm 1kV
Magnification: ×10,000
Electron gun: Cold-cathode field emission type electron gun
Accelerating voltage: 10 kV
Detector: SE (BSE)

### [FE-TEM measurement conditions]

Model: Themis Z
Accelerating voltage: 300 kV
Probe current @ 1 nm (nA*): 0.6
System energy resolution: 0.7 eV
STEM resolution (nm): 0.136
EDS-Scan rate: medium (30s/scan), 5 min.

FIGS. 1A to 1D are EDS images showing the FE-TEM cross-section of Comparative Example 6, wherein (a) is a cross-sectional FE-TEM image, (b) is an EDS mapping image of Ni element wherein a core boundary is marked, (c) is an EDS mapping image of Co element, and (d) is an EDS mapping image of Al element. This corresponds to the case where the coating elements are designed to be located on the external coating layer (the surface area corresponding to the outside of the core), and it can be seen that the coating elements isolated in the form of islands are formed as an external coating layer outside the core.

FIGS. 2A to 2D are EDS images of Comparative Example 11, wherein (a) is a cross-sectional FE-TEM image, (b) is an EDS mapping image of Ni element wherein a core boundary is marked, (c) is an EDS mapping image of Co element, and (d) is an EDS mapping image of Al element. It can be seen from FIGS. 2A to 2D that the internal coating layer (transition metal coating layer incorporated into the core) was formed deep and wide.

FIGS. 3A to 3D are EDS images of Example 3, wherein (a) is a cross-sectional FE-TEM image, (b) is an EDS mapping image of Ni element wherein a core boundary is marked, (c) is an EDS mapping image of Co element, and (d) is an EDS mapping image of Al element. It can be seen that both the external coating layer and the internal coating layer exist. Example 3 exhibits better electrochemical performance and stability than Comparative Example 6 and Comparative Example 11, because both a coating layer in which Co (cobalt) and a structure-stabilizing element are formed on the outside of the surface of the one-body particle and a coating layer in which Co (cobalt) and a structure-stabilizing element are formed inside the one-body particle coexist.

Although preferred embodiments of the present invention have been disclosed for illustrative purposes, those skilled in the art will appreciate that various modifications, additions, and substitutions are possible without departing from the scope and spirit of the invention as disclosed in the accompanying claims.

## Claims

1. A novel one-body particle for secondary battery active materials, comprising:
a core; and
a coating layer formed on at least a part of the core,
wherein the coating layer comprises both Co and a structure-stabilizing element,
the core is present as a non-aggregated primary particle, and
the structure-stabilizing element has a bond dissociation energy (BDE) with oxygen (O) greater than a bond dissociation energy (BDE) of Co and oxygen (O).

2. The novel one-body particle according to claim 1, wherein the core is a lithium transition metal oxide containing Ni.

3. The novel one-body particle according to claim 1, wherein the structure-stabilizing element comprises one or more of Zr, Ti, Al, P, Si, B, W, Mg, and Sn.

4. The novel one-body particle according to claim 1, wherein the structure-stabilizing element comprises one or more of Ti, Al, and W.

5. The novel one-body particle according to claim 1, wherein the coating layer is a multilayer including at least two layers.

6. The novel one-body particle according to claim 5, wherein the coating layer comprises both an external coating layer formed outward from the core surface and an internal coating layer formed inward from the core surface.

7. The novel one-body particle according to claim 6, wherein the external coating layer comprises at least one of Co, Zr, Ti, Al, P, Si, B, W, Mg, and Sn, and
the internal coating layer comprises at least one of Ni, Co, and Mn, and at least one of Zr, Ti, Al, P, Si, B, W, Mg, and Sn.

8. The novel one-body particle according to claim 1, wherein the coating layer has a thickness corresponding to 20% or less of an average particle diameter of the core.

9. The novel one-body particle according to claim 1, wherein the core comprises a composition of the following Formula 1:
LiₐNi_{b}Co_{c}Mn_{d}DₑOₓ (1)
wherein a, b, c, d, e and x satisfy 0.95<a<1.1, 0<b≤1, 0≤c<1, 0≤d<1, 0≤e≤0.05, and 0<x≤4, respectively, and
D includes at least one of Ti, Zr, Al, P, Si, B, W, Mg, and Sn.

10. The novel one-body particle according to claim 6, wherein the internal coating layer comprises at least one composition of the following Formulas 2 and 5:
LiₑNi_{f}Co_{g}MnₕMᵢOₖ (2)
wherein e, f, g, h, i, and k satisfy 0.95≤e≤1.1, 0≤f<1, 0<g<1, 0≤h<1, 0<i<1, and 0<k≤4, respectively, with the proviso that g>i, and
M includes at least one of Ti, Zr, Al, P, Si, B, W, Mg, and Sn,
LiₑNi_{f}Co_{g}MnₕMᵢOₖ (5)
wherein e, f, g, h, i, and k satisfy 0.95≤e≤1.1, 0≤f<1, 0<g<1, 0≤h<1, 0<i<1, and 0<k≤4, respectively, with the proviso that g≤i, and
M includes at least one of Ti, Zr, Al, P, Si, B, W, Mg, and Sn.

11. The novel one-body particle according to claim 6, wherein the external coating layer comprises at least one composition of the following Formulas 3, 4 and 6:
LiₗCoₘMₙOₚ (3)
wherein l, m, n, and p satisfy 0≤l≤1.1, 0<m<1, 0≤n<1, and 0<p≤4, respectively, with the proviso that m>n, and
M includes at least one of Ti, Zr, Al, P, Si, B, W, Mg, and Sn,
LiₗCoₘMₙOₚ (4)
wherein l, m, n and p satisfy 0≤l≤1.1, 0≤m<1, 0<n<1, and 0<p≤4, respectively, with the proviso that m<n, and
M includes at least one of Ti, Zr, Al, P, Si, B, W, Mg, and Sn,
LiₗCoₘMₙOₚ (6)
0≤l≤1.1, 0<m<1, 0<n<1, and 0<p≤4, and
M includes at least one of Ti, Zr, Al, P, Si, B, W, Mg, and Sn.

12. The novel one-body particle according to claim 6, wherein the internal coating layer comprises a composition of Formula 2 below and the external coating layer comprises a composition of Formula 3 below:
[Formula 2]
LiₑNi_{f}Co_{g}MnₕMᵢOₖ (2)
wherein e, f, g, h, i, and k satisfy 0.95≤e≤1.1, 0≤f<1, 0<g<1, 0≤h<1, 0≤i<1, and 0<k≤4, respectively, with the proviso that g>i, and
M includes at least one of Ti, Zr, Al, P, Si, B, W, Mg, and Sn.
[Formula 3]
LiₗCoₘMₙOₚ (3)
wherein l, m, n, and p satisfy 0≤l≤1.1, 0<m<1, 0≤n<1, and 0<p≤4, respectively, with the proviso that m>n, and
M includes at least one of Ti, Zr, Al, P, Si, B, W, Mg, and Sn.

13. The novel one-body particle according to claim 6, wherein the internal coating layer comprises a composition of Formula 5 below and the external coating layer comprises a composition of Formula 4 below:
[Formula 4]
LiₗCoₘMₙOₚ (4)
wherein l, m, n and p satisfy 0≤l≤1.1, 0≤m<1, 0<n<1, and 0<p≤4, respectively, with the proviso that m<n, and
M includes at least one of Ti, Zr, Al, P, Si, B, W, Mg, and Sn,
[Formula 5]
LiₑNi_{f}Co_{g}MnₕMᵢOₖ (5)
wherein e, f, g, h, i, and k satisfy 0.95≤e≤1.1, 0≤f<1, 0<g<1, 0≤h<1, 0<i<1, and 0<k≤4, respectively, with the proviso that g≤i, and
M includes at least one of Ti, Zr, Al, P, Si, B, W, Mg, and Sn.

14. The novel one-body particle according to claim 6, wherein the internal coating layer comprises a first coating layer comprising a composition of Formula 2 below and a second coating layer comprising a composition of Formula 5 below, and the external coating layer comprises a composition of Formula 6 below:
[Formula 2]
LiₑNi_{f}Co_{g}MnₕMᵢOₖ (2)
wherein e, f, g, h, i, and k satisfy 0.95≤e≤1.1, 0≤f<1, 0<g<1, 0≤h<1, 0≤i<1, and 0<k≤4, respectively, with the proviso that g>i, and
M includes at least one of Ti, Zr, Al, P, Si, B, W, Mg, and Sn,
[Formula 5]
LiₑNi_{f}Co_{g}MnₕMᵢOₖ (5)
wherein e, f, g, h, i, and k satisfy 0.95≤e≤1.1, 0≤f<1, 0<g<1, 0≤h<1, 0<i<1, and 0<k≤4, respectively, with the proviso that g≤i, and
M includes at least one of Ti, Zr, Al, P, Si, B, W, Mg, and Sn,
[Formula 6]
LiₗCoₘMₙOₚ (6)
wherein l, m, n and p satisfy 0≤l≤1.1, 0<m<1, 0<n<1, and 0<p≤4, respectively,
M includes at least one of Ti, Zr, Al, P, Si, B, W, Mg, and Sn.

15. The novel one-body particle according to claim 6, wherein the coating elements isolated in the form of islands are formed as an external coating layer outside the core.

16. An active material for secondary batteries comprising the novel one-body particle according to claim 1.
